# EUROPÄISCHE PATENTSCHRIFT

(11) **EP 2 851 629 B1**
(45) Veröffentlichungstag und Bekanntmachung des Hinweises auf die Patenterteilung: **06.09.2023**
(21) Anmeldenummer: 14178271.4
(22) Anmeldetag: 24.07.2014
(51) Int. Cl.: F24H 9/20, F28D 20/00, F24D 12/02, F24D 19/10, F24D 3/08

(54) **Heizsystem**
Heating system
Système de chauffage

(30) Priorität: 24.09.2013 DE 102013219142
(43) Veröffentlichungstag der Anmeldung: 25.03.2015
(73) Patentinhaber: Robert Bosch GmbH, 70442 Stuttgart (DE)
(72) Erfinder: Stumpp, Hermann, 73730 Esslingen (DE); Eisen, Thomas, 91747 Westheim (DE); Friede, Wolfgang, 71384 Weinstadt (DE); Herbert, Christian, 70327 Stuttgart-Untertuerkheim (DE); Laipple, Corinna, 70734 Fellbach (DE)

(56) Entgegenhaltungen:
- EP-A2- 1 316 771
- DE-A1- 10 319 645
- DE-A1- 19 704 986
- DE-A1-102009 023 143
- DE-A1-102010 056 370
- FR-A1- 2 405 443

## Beschreibung

Die Erfindung betrifft ein Heizsystem nach Patentanspruch 1 und ein Verfahren nach Patentanspruch 10.

### Stand der Technik

Die FR2405443 A1 offenbart ein Heizsystem nach dem Oberbegriff des Patentanspruchs 1 und ein Verfahren zu einem Betrieb eines Heizsystems nach dem Oberbegriff des Patentanspruchs 10.

### Offenbarung der Erfindung

Die Erfindung geht aus von einem Heizsystem mit zumindest einem ersten Warmwasserspeicher, welcher dazu vorgesehen ist, von zumindest einer ersten Wärmeerzeugereinheit beladen zu werden, mit zumindest einem zweiten Warmwasserspeicher, welcher dazu vorgesehen ist, von zumindest einer zweiten Wärmeerzeugereinheit beladen zu werden, und mit zumindest einer Verbindungsleitung von einem Kaltbereich des zumindest einen ersten Warmwasserspeichers zu einem Warmbereich des zumindest einen zweiten Warmwasserspeichers.

Es wird vorgeschlagen, dass das Heizsystem zumindest eine Pumpeneinheit umfasst, welche in der zumindest einen Verbindungsleitung angeordnet ist. Unter einem "Heizsystem" soll in diesem Zusammenhang insbesondere ein System verstanden werden, welches insbesondere zu einem Aufstellen innerhalb zumindest eines Gebäudes vorgesehen ist, und welches zu einer Erzeugung und/oder Speicherung und/oder Verteilung thermischer Energie vorgesehen ist, insbesondere in fluider Form, vorzugsweise in Form von Wasser. Insbesondere ist das Heizsystem zur Erwärmung und/oder Speicherung und/oder Verteilung von Trink- und/oder Brauchwasser und/oder zur Versorgung zumindest eines Heizkreises vorgesehen. Unter einem "Warmwasserspeicher" soll insbesondere ein, insbesondere gegen eine Umgebung wärmeisolierter, Wassertank verstanden werden, welcher insbesondere dazu vorgesehen ist, erwärmtes Wasser, insbesondere Trink- und/oder Brauchwasser, aufzunehmen und/oder zumindest temporär zu speichern. Vorzugsweise ist der zumindest eine erste Warmwasserspeicher in einer Einbaulage oberhalb des zumindest einen zweiten Warmwasserspeichers angeordnet. Alternativ ist es jedoch ebenso denkbar, dass der zumindest eine zweite Warmwasserspeicher oberhalb des zumindest einen ersten Warmwasserspeichers angeordnet ist und/oder die zumindest zwei Warmwasserspeicher nebeneinander angeordnet sind. Unter einer "Wärmeerzeugereinheit" soll in diesem Zusammenhang insbesondere eine Einheit verstanden werden, welche dazu vorgesehen ist, insbesondere unter Verwendung zumindest eines Energieträgers und/oder durch eine insbesondere chemische Reaktion und/oder durch Solarthermie, thermische Energie zu erzeugen und/oder nutzbar zu machen. Vorzugsweise ist die Wärmeerzeugereinheit dazu vorgesehen, ein Fluid, insbesondere Wasser, zu erhitzen und insbesondere einem Warmwasserspeicher zuzuführen. Besonders vorteilhaft sind die zumindest eine erste und die zumindest eine zweite Wärmeerzeugereinheit Teil des Heizsystems. Vorzugsweise weist die zumindest eine erste Wärmeerzeugereinheit dabei eine Wärmeleistung von wenigstens 1 kW, insbesondere von mindestens 5 kW, vorzugsweise von zumindest 10 kW und besonders vorteilhaft von wenigstens 15 kW auf. Vorzugsweise weist die zumindest eine zweite Wärmeerzeugereinheit dabei eine Wärmeleistung von wenigstens 100 W, insbesondere von mindestens 300 W, vorzugsweise von zumindest 500 W und besonders vorteilhaft von wenigstens 700 W auf. Unter einer "Verbindungsleitung" soll in diesem Zusammenhang insbesondere eine Hohlleitung, insbesondere eine Rohrleitung, verstanden werden, welche dazu vorgesehen ist, den zumindest einen ersten Warmwasserspeicher fluidtechnisch mit dem zumindest einen zweiten Warmwasserspeicher zu verbinden. Insbesondere ist die zumindest eine Verbindungsleitung dazu vorgesehen, einen Wasseraustausch zwischen dem zumindest einen ersten Warmwasserspeicher und dem zumindest einen zweiten Warmwasserspeicher zu ermöglichen.

Gemäß der Erfindung weist das Heizungssystem zumindest zwei Verbindungsleitungen vom Kaltbereich des ersten Warmwasserspeichers zum Warmbereich des zweiten Warmwasserspeichers auf, wobei eine Pumpeneinheit in einer der Verbindungsleitungen angeordnet ist, und wobei über die weitere Verbindungsleitung in zumindest einem Betriebszustand ein Rückfluss von Wasser entgegen einer Förderrichtung der Pumpeneinheit erfolgt.

Darunter, dass ein Warmwasserspeicher "beladen" wird, soll in diesem Zusammenhang insbesondere verstanden werden, dass eine thermische Energie in Wasser, welches in dem Warmwasserspeicher gespeichert ist direkt und/oder indirekt eingebracht wird. Unter einem "Kaltbereich" eines Warmwasserspeichers soll in diesem Zusammenhang insbesondere ein Bereich innerhalb des Wasserspeichers verstanden werden, in welchem eine innerhalb des Warmwasserspeichers gespeicherte Wassermenge eine Temperatur unterhalb einer durchschnittlichen Temperatur, insbesondere eine niedrigste Temperatur, aufweist. Unter einem "Warmbereich" eines Warmwasserspeichers soll in diesem Zusammenhang insbesondere ein Bereich innerhalb des Warmwasserspeichers verstanden werden, in welchem eine innerhalb des Warmwasserspeichers gespeicherte Wassermenge eine Temperatur oberhalb einer durchschnittlichen Temperatur, insbesondere eine höchste Temperatur, aufweist. Unter einer "Pumpeneinheit" soll in diesem Zusammenhang insbesondere eine Einheit, vorzugsweise eine Strömungspumpeneinheit und besonders vorteilhaft eine Kreiselpumpeneinheit, verstanden werden, welche dazu vorgesehen ist, zumindest ein, insbesondere zumindest im Wesentlichen inkompressibles, Fluid, vorzugsweise Wasser, zu fördern. Darunter, dass die zumindest eine Pumpeneinheit in der zumindest einen Verbindungsleitung "angeordnet" ist, soll in diesem Zusammenhang insbesondere verstanden werden, dass die zumindest eine Pumpeneinheit zumindest teilweise derart in die zumindest eine Verbindungsleitung eingebracht und/oder an der zumindest einen Verbindungsleitung angebracht ist, dass die zumindest eine Pumpeneinheit in zumindest einem Betriebszustand zumindest ein Fluid entlang der zumindest einen Verbindungsleitung fördert.

Gemäß der Erfindung weist eine Förderrichtung der zumindest einen Pumpeneinheit vom Kaltbereich des zumindest einen ersten Warmwasserspeichers zu dem Warmbereich des zumindest einen zweiten Warmwasserspeichers.

Durch die erfindungsgemäße Ausgestaltung kann ein gattungsgemäßes Heizsystem mit vorteilhaften Betriebseigenschaften bereitgestellt werden. Insbesondere kann durch die Anordnung der zumindest einen Pumpeneinheit eine vorteilhafte Wasserzirkulation zwischen dem zumindest einen ersten Warmwasserspeicher und dem zumindest einen zweiten Warmwasserspeicher erreicht werden. Hierdurch kann insbesondere ermöglicht werden, dass sich der zumindest eine erste Warmwasserspeicher und der zumindest eine zweite Warmwasserspeicher fluidtechnisch und/oder in Bezug auf eine Temperaturverteilung wie ein einziger Warmwasserspeicher verhalten. Des Weiteren kann eine von der zumindest zweiten Wärmeerzeugereinheit erzeugte thermische Energie vorteilhaft genutzt und/oder eine notwendige Betriebsdauer der zumindest einen ersten Wärmeerzeugereinheit vorteilhaft reduziert werden. Ferner kann eine vorteilhaft einfache Erweiterung eines bestehenden Heizsystems, welches insbesondere einen ersten Warmwasserspeicher und eine ersten Wärmeerzeugereinheit umfasst, um einen zweiten Warmwasserspeicher und/oder eine zweite Wärmeerzeugereinheit ermöglicht werden.

In einer bevorzugten Ausgestaltung der Erfindung wird vorgeschlagen, dass die Pumpeneinheit dazu vorgesehen ist, eine maximale Wassertemperatur in dem zumindest einen zweiten Warmwasserspeicher unterhalb einer minimalen Wassertemperatur in dem zumindest einen ersten Warmwasserspeicher zu halten.

Gemäß der Erfindung transportiert die zumindest eine Pumpeneinheit, Wasser entlang zumindest einer ersten Verbindungsleitung vom Kaltbereich des zumindest einen ersten Warmwasserspeicher zu dem Warmbereich des zumindest einen zweiten Warmwasserspeicher.

Gemäß der Erfindung erfolgt ein Rückfluss von Wasser entgegen einer Förderrichtung der zumindest einen Pumpeneinheit über zumindest eine zweite Verbindungsleitung. Es kann eine vorteilhafte Temperaturschichtung über den zumindest einen ersten Warmwasserspeicher und den zumindest einen zweiten Warmwasserspeicher hinweg erreicht werden. Ferner kann ein vorteilhaft effektiver Betrieb der zumindest einen zweiten Wärmeerzeugereinheit erreicht werden.

Des Weiteren wird vorgeschlagen, dass das Heizsystem zumindest eine Sensoreinheit aufweist, welche dazu vorgesehen ist, zumindest eine Temperaturkenngröße des zumindest einen ersten Warmwasserspeichers und/oder des zumindest einen zweiten Warmwasserspeichers zu erfassen. Unter einer "Sensoreinheit" soll in diesem Zusammenhang insbesondere eine Einheit verstanden werden, welche dazu vorgesehen ist, insbesondere physikalische und/oder chemische Eigenschaften und/oder die stoffliche Beschaffenheit ihrer Umgebung qualitativ und/oder als Messgröße quantitativ zu erfassen. Vorzugsweise weist die zumindest eine Sensoreinheit zumindest zwei Sensorelemente auf, von welchen zumindest ein erstes Sensorelement dazu vorgesehen ist, zumindest eine Temperaturkenngröße des zumindest einen ersten Warmwasserspeichers zu erfassen und/oder zumindest ein zweites Sensorelement dazu vorgesehen ist, eine Temperaturkenngröße des zumindest einen zweiten Warmwasserspeichers zu erfassen. Unter einer "Temperaturkenngröße" soll in diesem Zusammenhang insbesondere eine Kenngröße verstanden werden, welche zumindest eine Information über zumindest eine Temperatur, insbesondere über eine Wassertemperatur innerhalb des zumindest einen ersten Warmwasserspeichers und/oder des zumindest einen zweiten Warmwasserspeichers, enthält. Vorzugsweise enthält die zumindest eine Temperaturkenngröße zumindest eine Information, welche zumindest eine Temperaturdifferenz zwischen zumindest einem Bereich innerhalb des zumindest einen ersten Warmwasserspeichers und zumindest einem Bereich des zumindest einen zweiten Warmwasserspeichers widerspiegelt. Insbesondere kann eine Erfassung der zumindest einen Temperaturkenngröße kontinuierlich und/oder in, insbesondere festen, Zeitabständen erfolgen. Hierdurch kann auf vorteilhaft einfache und/oder zuverlässige Weise eine Erfassung von relevanten Temperaturkenngrößen erreicht werden.

In einer bevorzugten Ausgestaltung der Erfindung wird vorgeschlagen, dass die zumindest eine Sensoreinheit zumindest teilweise in und/oder an dem zumindest einen ersten und/oder in und/oder an dem zumindest einen zweiten Warmwasserspeicher angeordnet ist. Insbesondere ist zumindest ein erstes Sensorelement innerhalb des zumindest einen ersten Warmwasserspeichers, insbesondere in einem Kaltbereich des zumindest einen ersten Warmwasserspeichers, angeordnet. Ein zweites Sensorelement der zumindest einen Sensoreinheit ist insbesondere in dem zumindest einen zweiten Warmwasserspeicher, insbesondere in einem Warmbereich des zumindest einen zweiten Warmwasserspeicher, angeordnet. Hierdurch kann auf vorteilhaft einfache Weise eine Temperaturdifferenz zwischen dem zumindest einen ersten Warmwasserspeicher und dem zumindest einen zweiten Warmwasserspeicher erfasst werden. Insbesondere kann eine Temperaturdifferenz zwischen dem Kaltbereich des zumindest einen Warmwasserspeichers und dem Warmbereich des zumindest einen Warmwasserspeichers erfasst werden.

In einer weiteren Ausgestaltung der Erfindung wird vorgeschlagen, dass die zumindest eine Sensoreinheit zumindest teilweise in der zumindest einen Verbindungsleitung und/oder in der zumindest einen Pumpeneinheit angeordnet ist. Insbesondere ist zumindest ein erstes Sensorelement derart an und/oder zumindest teilweise in der zumindest einen Pumpeneinheit und/oder einer mit der zumindest einen Pumpeneinheit verbundenen Verbindungsleitung angeordnet, dass es in zumindest einem Betriebszustand zumindest eine Temperaturkenngröße des von der zumindest einen Pumpeneinheit geförderten Wassers erfasst. Insbesondere ist ein zumindest zweites Sensorelement der zumindest einen Sensoreinheit derart an und/oder zumindest teilweise in der zumindest einen Verbindungsleitung angeordnet, dass es in zumindest einem Betriebszustand zumindest eine Temperaturkenngröße von entgegen der Förderrichtung der zumindest einen Pumpeneinheit zurückfließendem Wasser erfasst. Hierdurch kann insbesondere eine vorteilhaft einfache und/oder kostengünstige Nachrüstung einer Sensoreinheit in ein bestehendes Heizsystem ermöglicht werten.

Überdies wird vorgeschlagen, dass das Heizsystem zumindest eine Steuer- und/oder Regeleinheit aufweist, welche dazu vorgesehen ist, die zumindest eine Pumpeneinheit in Abhängigkeit von der zumindest einen Temperaturkenngröße anzusteuern. Die zumindest eine Steuer- und/oder Regeleinheit ist dabei insbesondere dazu vorgesehen, zumindest eine von der zumindest einen Sensoreinheit erfasste Temperaturkenngröße aufzunehmen und/oder auszuwerten. Vorteilhaft umfasst die Steuer- und/oder Regeleinheit zumindest eine Steuerelektronik. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Die Steuereinheit kann insbesondere Teil der Steuerung einer der Wärmeerzeugereinheiten sein oder mit einer anderen Regel- und/oder Steuerfunktion im Heizkreis in einer Einheit zusammengefasst sein. Vorzugsweise erfolgt ein Ansteuern der zumindest einen Pumpeneinheit durch die zumindest eine Steuer- und/oder Regeleinheit bei einem Übersteigen einer festgelegten Temperaturdifferenz zwischen dem zumindest einen ersten Warmwasserspeicher und dem zumindest einen zweiten Warmwasserspeicher. Insbesondere steuert die zumindest eine Steuer- und/oder Regeleinheit die zumindest eine Pumpeneinheit immer dann an, wenn eine Temperatur des Kaltbereichs des zumindest einen ersten Warmwasserspeichers eine Temperatur des Warmbereichs des zumindest einen zweiten Warmwasserspeichers übersteigt. Ist die zumindest eine Sensoreinheit zumindest teilweise in der zumindest einen Verbindungsleitung angeordnet ist, erfolgt eine Erfassung und/oder Auswertung von zumindest einer Temperaturkenngröße vorzugsweise während eines Betriebs der zumindest einen Pumpeneinheit. Hierdurch kann eine vorteilhafte Zirkulation von Wasser zwischen dem zumindest einen ersten Warmwasserspeicher und dem zumindest einen zweiten Warmwasserspeicher erreicht werden. Ferner kann vorteilhaft schnell und/oder zuverlässig auf eine auftretende Temperaturdifferenz reagiert werden.

In einer bevorzugten Ausgestaltung der Erfindung wird vorgeschlagen, dass das Heizsystem die zumindest eine zweite Wärmeerzeugereinheit aufweist, und diese als Brennstoffzellen-Heizeinheit ausgebildet ist. Unter einem Brennstoffzellen-Heizgerät soll in diesem Zusammenhang insbesondere ein Heizgerät mit zumindest einer Brennstoffzelle, insbesondere einer Hochtemperaturbrennstoffzelle, vorzugsweise einer Festoxidbrennstoffzelle, verstanden werden. Vorzugsweise ist die zumindest eine Brennstoffzelle zur Erzeugung thermischer und/oder elektrischer Energie vorgesehen. Hierdurch kann eine vorteilhaft einfache Einbindung eines Brennstoffzellen-Heizgeräts insbesondere in ein bereits bestehendes insbesondere konventionelles Heizsystem ermöglicht werden.

Vorteilhaft ist der zumindest eine erste Warmwasserspeicher als Schichtladespeicher ausgebildet. Unter einem "Schichtladespeicher" soll in diesem Zusammenhang insbesondere ein Warmwasserspeicher verstanden werden, welcher derart mit erwärmtem Wasser beladen wird, dass sich eine Temperaturschichtung innerhalb des Warmwasserspeichers ergibt, insbesondere von relativ warmem Wasser in einem oberen Bereich und von relativ kaltem Wasser in einem unteren Bereich. Hierdurch kann bei einer Erweiterung eines bestehenden Heizsystems eine vorteilhafte Weiterverwendung eines vorhandenen Warmwasserspeichers ermöglicht werden.

In einer weiteren bevorzugten Ausgestaltung der Erfindung wird vorgeschlagen, dass der zumindest eine zweite Warmwasserspeicher als Rohrschlangenspeicher ausgebildet ist. Unter einem "Rohrschlangenspeicher" soll in diesem Zusammenhang insbesondere ein Warmwasserspeicher verstanden werden, bei welchem ein erwärmtes Fluid insbesondere Wasser, durch eine, insbesondere spiralförmige, Rohrleitung durch einen Innenraum des Warmwasserspeichers geführt wird, wobei thermische Energie an im Innenraum des Warmwasserspeicher gespeichertes Wasser übergeht. Hierdurch kann vorteilhaft erreicht werden, dass zur Beladung des zumindest einen zweiten Warmwasserspeichers auch Wärmeerzeugereinheiten mit relativ geringer Wärmeleistung verwendet werden können.

Vorteilhaft weist das Heizsystem zumindest eine Verbrühschutzeinheit auf. Unter einer "Verbrühschutzeinheit" soll in diesem Zusammenhang insbesondere eine Einheit verstanden werden, welche insbesondere dazu vorgesehen ist, einer insbesondere aus dem Warmbereich des zumindest einen ersten Warmwasserspeichers entnommenen Wassermenge bei einem Überschreiten einer festgelegten Temperaturgrenze kälteres Wasser beizumengen. Hierdurch können Verletzungen durch Verbrühen aufgrund einer zu hohen Wassertemperatur vorteilhaft vermieden werden.

Ein weiterer Aspekt der Erfindung geht aus von einem Verfahren gemäß Anspruch 10.

Erfindungsgemäß wird in zumindest einem Betriebszustand Wasser aktiv aus einem Kaltbereich des zumindest einen ersten Wasserspeichers in einen Warmbereich des zumindest einen zweiten Wasserspeichers transportiert. Darunter, dass Wasser "aktiv" transportiert wird, soll in diesem Zusammenhang insbesondere verstanden werden, dass das Wasser mittels eines geeigneten Mittels, beispielsweise mittels einer Pumpe, in eine, insbesondere gerichtete, Bewegung versetzt wird. Hierdurch kann ein vorteilhaft effizienter Betrieb des Heizungssystems erreicht werden.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Heizsystem mit einem ersten Warmwasserspeicher, einem zweiten Warmwasserspeicher und einer Sensoreinheit, wobei jeweils ein Sensorelement innerhalb des ersten Warmwasserspeichers und des zweiten Warmwasserspeichers angeordnet ist,
- Fig. 2: ein alternatives Heizsystem, bei welchem Sensorelemente in Verbindungsleitungen zwischen einem ersten Warmwasserspeicher und einem zweiten Warmwasserspeicher angeordnet sind und
- Fig. 3: ein weiteres alternatives Heizsystem ohne Sensoreinheit.

### Beschreibung der Ausführungsbeispiele

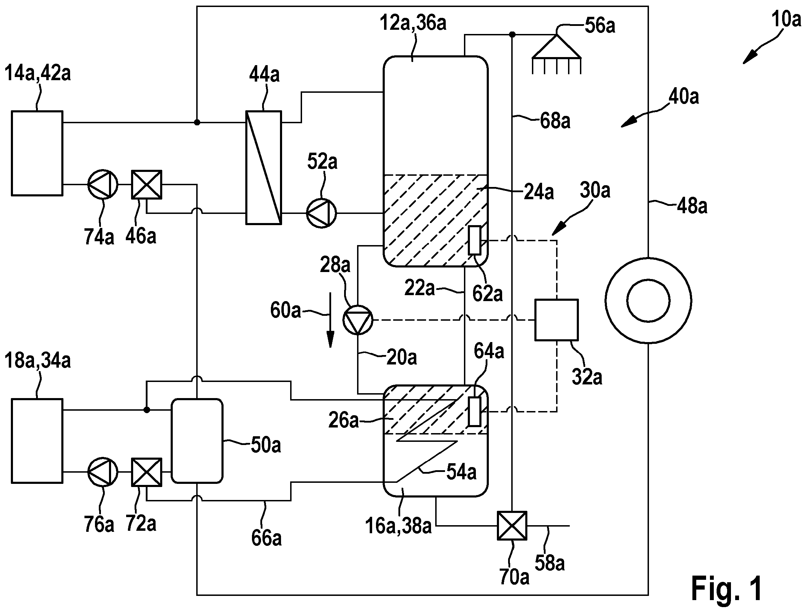

Die Figur 1 zeigt ein erfindungsgemäßes Heizsystem 10a mit einem ersten Warmwasserspeicher 12a und einem zweiten Warmwasserspeicher 16a. Der erste Warmwasserspeicher 12a ist als Schichtladespeicher 36a ausgebildet. Ferner umfasst das Heizungssystem eine erste Wärmeerzeugereinheit 14a zur Erzeugung thermischer Energie. Die erste Wärmeerzeugereinheit 18a ist vorzugsweise als Gastherme 42a ausgebildet, welche beispielsweise aus einem hier nicht dargestellten Erdgasnetz gespeist wird. Über einen Wärmetauscher 44a ist der erster Warmwasserspeicher 12a durch die erster Wärmeerzeugereinheit 14a mit thermischer Energie beladbar. Hierzu wird Wasser aus dem ersten Warmwasserspeicher 12a mittels einer Speicherladepumpe 52a durch den Wärmetauscher 44a gefördert und in den ersten Warmwasserspeicher 12a zurückgeführt. Dabei nimmt das Wasser Wärme von durch die erste Wärmeerzeugereinheit 14a erwärmtem Wasser, welches ebenfalls durch den Wärmetauscher 44a gefördert wird, auf. Bei der Beladung des ersten Warmwasserspeichers 12a ergibt sich ein temperaturabhängige Schichtung des Wassers innerhalb des ersten Warmwasserspeichers 12a. Über einen Entnahmepunkt 56a ist warmes Wasser, insbesondere als Brauch- und/oder Trinkwasser, aus dem ersten Warmwasserspeicher 12a entnehmbar.

Des Weiteren umfasst das Heizsystem 10a eine zweite Wärmeerzeugereinheit 18a. Die zweite Wärmeerzeugereinheit 18a ist über eine hydraulische Weiche 50a in einen Heizkreis 48a mit der ersten Wärmeerzeugereinheit 14a eingebunden. Der Heizkreis 48a kann durch Umstellen eines Ventils 46a mittels einer Pumpe 74a mit Wärme versorgt werden. Ebenso ist es jedoch auch denkbar eine Vielzahl von Heizkreisen mit Wärme zu versorgen. Die zweite Wärmeerzeugereinheit 18a ist als Brennstoffzellen-Heizeinheit 34a ausgebildet. Alternativ wäre jedoch auch eine Verwendung einer anderen Wärmeerzeugereinheit, beispielsweise einer Sonnenkollektoreinheit, denkbar. Unterhalb des ersten Warmwasserspeichers 12a ist ein zweiter Warmwasserspeicher 16a angeordnet. Alternativ ist es auch möglich bei identischer Funktionalität eine Position eines ersten Warmwasserspeichers und eines zweiten Warmwasserspeichers zu vertauschen und/oder einen ersten und einen zweiten Warmwasserspeicher nebeneinander anzuordnen. Der zweite Warmwasserspeicher 16a ist als Rohrschlangenspeicher 38a ausgebildet. In einem Innenraum weist der zweite Warmwasserspeicher 16a eine Heizwendel 54a auf. Zur Erwärmung von in dem zweiten Warmwasserspeicher 16a gespeicherten Wasser, wird durch Umschalten eines Ventils 72a Wasser, welches von der zweiten Wärmeerzeugereinheit 18a erwärmt wird, mittels einer Pumpe 76a durch die Heizwendel 54a gefördert, wobei eine Wärmeübertragung auf das in dem zweiten Warmwasserspeicher 16a gespeicherte Wasser erfolgt. Ferner weist der zweite Warmwasserspeicher 16a einen Wasserzufluss 58a, welcher beispielsweise aus einem hier nicht dargestellten Trinkwassernetz gespeist wird, auf.

Der erste Warmwasserspeicher 12a und der zweite Warmwasserspeicher 16a sind über zwei Verbindungsleitungen 20a, 22a mit einander verbunden. Die Verbindungsleitungen 20a, 22a verbinden jeweils einen Kaltbereich 24a des ersten Warmwasserspeichers 12a mit einem Warmbereich 26a des zweiten Warmwasserspeichers 16a. In einer der zwei Verbindungsleitungen 20a ist eine Pumpeneinheit 28a angeordnet. Eine Förderrichtung 60a der Pumpeneinheit 28a weist von dem Kaltbereich 24a des ersten Warmwasserspeichers 12a zum Warmbereich 26a des zweiten Warmwasserspeichers 16a. n der dargestellten Ausführung sind die Verbindungsleitungen 20a, 22b jeweils an separaten Anschlüssen des ersten und des zweiten Warmwasserspeichers 12a, 16a angeschlossen. Ebenso ist jedoch auch eine Verwendung von Warmwasserspeichern mit nur einem Anschluss denkbar, wobei ein Anschluss einer Pumpeneinheit über einen koaxialen Anschlussstutzen erfolgen kann. Des Weiteren ist es denkbar, dass eine Verbindungsleitung, welche dazu vorgesehen ist, Wasser von einem Kaltbereich eines ersten Warmwasserspeichers in einem Warmbereich eines zweiten Warmwasserspeichers zu leiten, Wasser direkt einem Anschluss einer Speicherladepumpe entnimmt.

Überdies umfasst das Heizsystem 10a eine Sensoreinheit 30a, welche zwei Sensorelemente 62a, 64a aufweist. Ein erstes Sensorelement 62a ist in dem Kaltbereich 24a des ersten Warmwasserspeichers 12a angeordnet. Ein zweites Sensorelement 64a ist in dem Warmbereich 26a des zweiten Warmwasserspeichers 16a angeordnet. Die Sensorelemente 62a, 64a erfassen kontinuierlich Wassertemperaturwerte. Die erfassten Wassertemperaturwerte werden an eine Steuer- und/oder Regeleinheit 32a übertragen und von dieser ausgewertet. Wird bei der Auswertung der Wassertemperaturwerte festgestellt, dass eine Wassertemperatur im Warmbereich 26a des zweiten Warmwasserspeichers 16a eine Wassertemperatur im Kaltbereich 24a des ersten Warmwasserspeichers 12a übersteigt, wird die Pumpeneinheit 28a durch die Steuer- und/oder Regeleinheit 32a angesteuert. Hierdurch wird kaltes Wasser aus dem ersten Warmwasserspeicher 12a über eine erste der Verbindungsleitungen 20a in den zweiten Warmwasserspeicher 16a transportiert. Über eine zweite der Verbindungsleitungen 22a fließt warmes Wasser aus dem zweiten Warmwasserspeicher 16a in den ersten Warmwasserspeicher 12a zurück. Eine maximale Wassertemperatur des zweiten Warmwasserspeichers 16a wird somit stets unter einer minimalen Wassertemperatur des ersten Warmwasserspeichers 12a gehalten. Dadurch wird insbesondere auch eine Wassertemperatur in einem Rücklauf 66a der zweiten Wärmeerzeugereinheit 18a möglichst gering gehalten. Ferner wird die von der zweiten Wärmeerzeugereinheit 18a erzeugte Wärme optimal zur Erwärmung des ersten Warmwasserspeichers 12a genutzt, wodurch eine notwendige Betriebsdauer der ersten Wärmeerzeugereinheit 14a reduziert wird.

Ferner weist das Heizsystem 10a eine Verbrühschutzeinheit 40a auf. Die Verbrühschutzeinheit 40a umfasst eine Verbindungsleitung 68a sowie ein Ventil 70a. Die Verbindungsleitung 68a verbindet den Wasserzufluss 58a mit dem Entnahmepunkt 56a. Übersteigt eine Wassertemperatur am Entnahmepunkt 56a einen Temperaturgrenzwert, so wird dem Wasser am Entnahmepunkt 56a über das Ventil 70a und die Verbindungsleitung 68a kaltes Wasser aus dem Wasserzufluss 58a zugemischt.

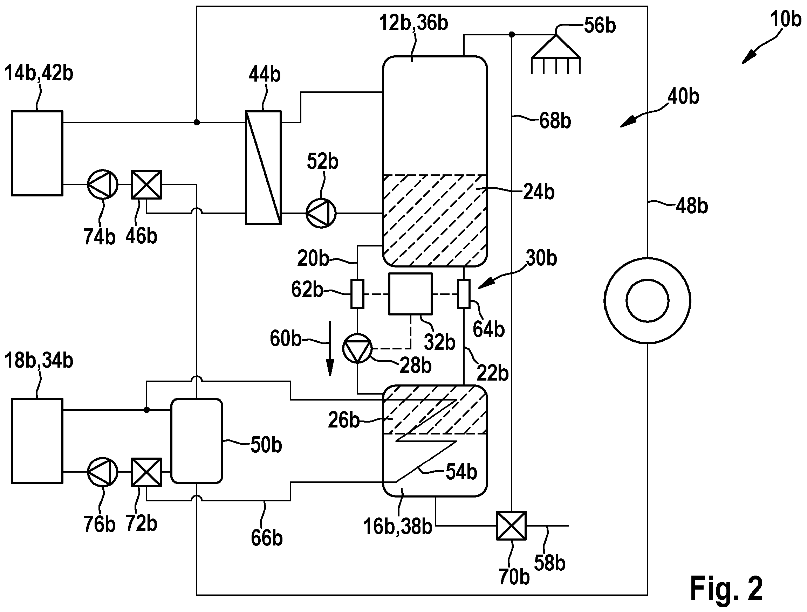

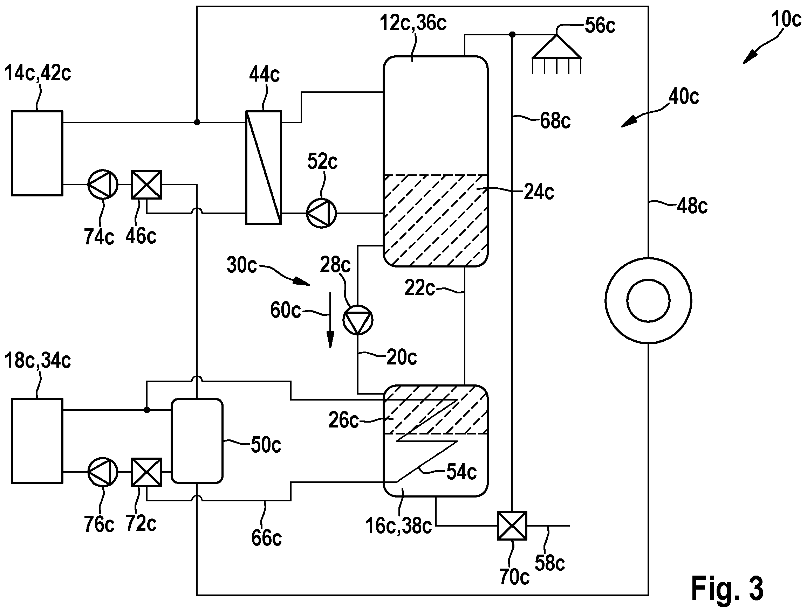

In den Figuren 2 und 3 sind zwei weitere Ausführungsbeispiele der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 und 3 ist der Buchstabe a durch die Buchstaben b und c ersetzt.

Die Figur 2 zeigt ein alternatives Heizsystem 10b. Das Heizsystem 10b unterscheidet sich lediglich durch eine Positionierung einer Sensoreinheit 30b mit zwei Sensorelementen 62b, 64b von dem in der Figur 1 dargestellten Heizsystem 10a.

Bei dem Heizsystem 10b in der Figur 2 ist ein erstes Sensorelement 62b zusammen mit einer Pumpeneinheit 28b in einer ersten Verbindungsleitung 20a zwischen einem Kaltbereich 24b eines ersten Warmwasserspeichers 12a und einem Warmbereich 26a eines zweiten Warmwasserspeichers 16a angeordnet. Ein zweites Sensorelement 64b ist in einer zweiten Verbindungsleitung 22b zwischen dem Kaltbereich 24b des ersten Warmwasserspeichers 12b und dem Warmbereich 26a des zweiten Warmwasserspeichers 16a angeordnet. Die Anordnung der Sensorelemente 62b, 64b in den Verbindungsleitungen 20b, 22b erleichtert insbesondere eine nachträgliche Installation in ein bestehendes Heizsystem.

Zur Erfassung von Wassertemperatur durch die Sensorelemente 62b, 64b wird die Pumpeneinheit 28b in regelmäßigen Zeitabständen durch eine Steuer- und/oder Regeleinheit 32a für eine festgelegte Zeitdauer angesteuert. Während dieser Zeitdauer wird eine Wassertemperatur des durch die Verbindungsleitungen 20b, 22b fließenden Wassers durch die Sensorelemente 62b, 64b erfasst und an die Steuer- und/oder Regeleinheit 32b übermittelt.

Erfasst das zweite Sensorelement 64b eine niedrigere Wassertemperatur als das erste Sensorelement 62b so wird die Pumpeneinheit 28b durch die Steuer- und/oder Regeleinheit 32b gestoppt. Erfasst das zweite Sensorelement 64b eine höherer Wassertemperatur als das erste Sensorelement 62b, so wird durch die Pumpeneinheit 28b solange Wasser aus dem Kaltbereich 24b des ersten Warmwasserspeichers 12b in den Warmbereich 26b des zweiten Warmwasserspeichers 16b gefördert, bis beide Sensorelemente 62b, 64b eine identische Wassertemperatur erfassen und oder das zweite Sensorelement 64b eine niedrigere Wassertemperatur wir das erste Sensorelement 62b erfasst.

Wird die Pumpeinheit 28b in umgekehrter Richtung betrieben, reagiert die Steuer- und/oder Regeleinheit 32b entsprechend auf umgekehrte Temperaturunterschiede.

Die Figur 3 zeigt eine weitere alternative Ausführung eines erfindungsgemäßen Heizsystems 10c. Im Gegensatz zu den in den Figuren 1 und 2 dargestellten Heizsystemen 10a, 10b verzichtet das in der Figur 3 gezeigte Heizsystem 10c auf eine Steuer- und/oder Regeleinheit und auf eine Sensoreinheit.

Bei dem in der Figur 3 dargestellten Ausführungsbeispiel ist eine Pumpeneinheit 28c dazu vorgesehen, in einem Dauerbetrieb betrieben zu werden. Der Dauerbetrieb der Pumpeneinheit 28c bewirkt eine stetige Wasserzirkulation zwischen einem Kaltbereich 24c eines ersten Warmwasserspeichers 12c und einem Warmbereich 26c eines zweiten Warmwasserspeichers 16c.

Alternativ kann ein Betrieb der Pumpeneinheit 28c auch mit einem Betriebszustand, insbesondere einem Betriebszustand zu einer Warmwasserbereitung, einer zweiten Wärmeerzeugereinheit 18c gekoppelt sein. Dies kann beispielsweise durch eine Kopplung der Pumpeneinheit 28c mit einem Ventil 72c der zweiten Wärmeerzeugereinheit 18c erfolgen. In diesem Fall wird die Pumpeneinheit 28c immer dann betrieben, wenn das Ventil 72c in eine für eine Warmwasserbereitung durch die zweite Wärmeerzeugereinheit benötigte Stellung gebracht wird. Die Pumpeneinheit 28c kann hier gegebenenfalls noch eine gewisse Zeit nachlaufen.

## Patentansprüche

1. Heizsystem mit zumindest einem ersten Warmwasserspeicher (12a; 12b; 12c), welcher dazu vorgesehen ist, von zumindest einer ersten Wärmeerzeugereinheit (14a; 14b; 14c) beladen zu werden, mit zumindest einem zweiten Warmwasserspeicher (16a; 16b; 16c), welcher dazu vorgesehen ist, von zumindest einer zweiten Wärmeerzeugereinheit (18a; 18b; 18c) beladen zu werden, mit zumindest einer Verbindungsleitung (20a; 20b; 20c) von einem Kaltbereich (24a; 24b; 24c) des zumindest einen ersten Warmwasserspeichers (12a; 12b; 12c) zu einem Warmbereich (26a; 26b; 26c) des zumindest einen zweiten Warmwasserspeichers (16a; 16b; 16c), und mit zumindest einer Pumpeneinheit (28a, 28b; 28c), welche in der zumindest einen Verbindungsleitung (20a; 20b; 20c) angeordnet ist, und mit zumindest einer weiteren Verbindungsleitung (22a; 22b; 22c), über welche in zumindest einem Betriebszustand ein Rückfluss von Wasser entgegen einer Förderrichtung der zumindest einen Pumpeinheit erfolgt, **gekennzeichnet dadurch, dass** die weitere Verbindungsleitung (22a; 22b; 22c) den Kaltbereich (24a; 24b; 24c) des zumindest einen ersten Warmwasserspeichers (12a; 12b; 12c) mit dem Warmbereich (26a; 26b; 26c) des zumindest einen zweiten Warmwasserspeichers (16a; 16b; 16c) verbindet, wobei über die weitere Verbindungsleitung (22a; 22b; 22c) warmes Wasser aus dem zweiten Warmwasserspeicher (16a; 16b; 16c) in den ersten Warmwasserspeicher (12a; 12b; 12c) zurückfließt, womit eine maximale Wassertemperatur des zweiten Warmwasserspeichers (16a; 16b; 16c) stets unter einer minimalen Wassertemperatur des ersten Warmwasserspeichers (12a; 12b; 12c) gehalten wird.

2. Heizsystem nach Anspruch 1, **dadurch gekennzeichnet, dass** die Pumpeneinheit (28a; 28b; 28c) dazu vorgesehen ist, eine maximale Wassertemperatur in dem zumindest einen zweiten Warmwasserspeicher (16a; 16b; 16c) unterhalb einer minimalen Wassertemperatur in dem zumindest einen ersten Warmwasserspeicher (12a; 12b; 12c) zu halten.

3. Heizsystem nach einem der vorhergehenden Ansprüche, **gekennzeichnet durch** zumindest eine Sensoreinheit (30a; 30b; 30c), welche dazu vorgesehen ist, zumindest eine Temperaturkenngröße des zumindest einen ersten Warmwasserspeichers (12a; 12b; 12c) und/oder des zumindest einen zweiten Warmwasserspeichers (16a; 16b; 16c) zu erfassen.

4. Heizsystem nach Anspruch 3, **dadurch gekennzeichnet, dass** die zumindest eine Sensoreinheit (30a; 30b; 30c) zumindest teilweise in dem zumindest einen ersten Warmwasserspeicher (12a; 12b; 12c) und/oder in dem zumindest einen zweiten Warmwasserspeicher (16a; 16b; 16c) angeordnet ist.

5. Heizsystem nach Anspruch 3 oder 4, **dadurch gekennzeichnet, dass** die zumindest eine Sensoreinheit (30a; 30b; 30c) zumindest teilweise in der zumindest einen Verbindungsleitung (20a; 20b; 20c) und/oder in der zumindest einen Pumpeneinheit (28a; 28b; 28c) angeordnet ist.

6. Heizsystem nach einem der Ansprüche 3 bis 5, **gekennzeichnet durch** zumindest eine Steuer- und/oder Regeleinheit (32a; 32b; 32c), welche dazu vorgesehen ist, die zumindest eine Pumpeneinheit (28a; 28b; 28c) in Abhängigkeit von der zumindest einen Temperaturkenngröße anzusteuern.

7. Heizsystem nach einem der vorhergehenden Ansprüche, wobei die zumindest eine erste und die zumindest eine zweite Wärmeerzeugereinheit Teil des Heizsystems sind, **gekennzeichnet durch** die zumindest eine zweite Wärmeerzeugereinheit (18a; 18b; 18c), welche als Brennstoffzellen-Heizeinheit (34a; 34b; 34c) ausgebildet ist.

8. Heizsystem nach einem der vorhergehenden Ansprüche, **dadurch gekennzeichnet, dass** der zumindest eine erste Warmwasserspeicher (12a; 12b; 12c) als Schichtladespeicher (36a; 36b; 36c) ausgebildet ist.

9. Heizsystem nach einem der vorhergehenden Ansprüche, **dadurch gekennzeichnet, dass** der zumindest eine zweite Warmwasserspeicher (16a; 16b; 16c) als Rohrschlangenspeicher (38a; 38b; 38c) ausgebildet ist.

10. Verfahren zum Betrieb eines Heizsystems (10a; 10b; 10c) nach einem der vorhergehenden Ansprüche, wobei in zumindest einem Betriebszustand Wasser aktiv aus einem Kaltbereich (24a; 24b; 24c) des zumindest einen ersten Warmwasserspeichers (12a; 12b; 12c) in einen Warmbereich (26a; 26b; 26c) des zumindest einen zweiten Warmwasserspeichers (16a; 16b; 16c) transportiert wird, wobei ein Rückfluss von Wasser entgegen einer Förderrichtung der zumindest einen Pumpeneinheit (28a, 28b; 28c) über zumindest eine zweite Verbindungsleitung (22a; 22b; 22c) erfolgt, **gekennzeichnet dadurch, dass** die weitere Verbindungsleitung (22a; 22b; 22c) den Kaltbereich (24a; 24b; 24c) des zumindest einen ersten Warmwasserspeichers (12a; 12b; 12c) mit dem Warmbereich (26a; 26b; 26c) des zumindest einen zweiten Warmwasserspeichers (16a; 16b; 16c) verbindet, wobei über die weitere Verbindungsleitung (22a; 22b; 22c) warmes Wasser aus dem zweiten Warmwasserspeicher (16a; 16b; 16c) in den ersten Warmwasserspeicher (12a; 12b; 12c) zurückfließt, womit eine maximale Wassertemperatur des zweiten Warmwasserspeichers (16a; 16b; 16c) stets unter einer minimalen Wassertemperatur des ersten Warmwasserspeichers (12a; 12b; 12c) gehalten wird.

## Claims

1. Heating system with at least one first hot water tank (12a; 12b; 12c) which is provided to be charged by at least one first heat generator unit (14a; 14b; 14c), with at least one second hot water tank (16a; 16b; 16c) which is provided to be charged by at least one second heat generator unit (18a; 18b; 18c), with at least one connecting line (20a, 20b, 20c) from a cold zone (24a; 24b; 24c) of the at least one first hot water tank (12a; 12b; 12c) to a hot zone (26a; 26b; 26c) of the at least one second hot water tank (16a; 16b; 16c), and with at least one pump unit (28a, 28b; 28c) which is arranged in the at least one connecting line (20a, 20b, 20c), and with at least one further connecting line (22a, 22b, 22c), via which a return flow of water counter to a delivery direction of the at least one pump unit takes place in at least one operating state, **characterized in that** the further connecting line (22a, 22b, 22c) connects the cold zone (24a, 24b, 24c) of the at least one first hot water tank (12a, 12b, 12c) to the hot zone (26a, 26b, 26c) of the at least one second hot water tank (16a, 16b, 16c), hot water flowing back from the second hot water tank (16a, 16b, 16c) into the first hot water tank (12a, 12b, 12c) via the further connecting line (22a, 22b, 22c), whereby a maximum water temperature of the second hot water tank (16a, 16b, 16c) is always kept below a minimum water temperature of the first hot water tank (12a, 12b, 12c).

2. Heating system according to Claim 1, **characterized in that** the pump unit (28a; 28b; 28c) is provided to keep a maximum water temperature in the at least one second hot water tank (16a; 16b; 16c) below a minimum water temperature in the at least one first hot water tank (12a; 12b; 12c).

3. Heating system according to either of the preceding claims, **characterized by** at least one sensor unit (30a; 30b; 30c) which is provided to detect at least one temperature parameter of the at least one first hot water tank (12a; 12b; 12c) and/or of the at least one second hot water tank (16a; 16b; 16c).

4. Heating system according to Claim 3, **characterized in that** the at least one sensor unit (30a; 30b; 30c) is arranged at least partially in the at least one first hot water tank (12a; 12b; 12c) and/or in the at least one second hot water tank (16a; 16b; 16c).

5. Heating system according to Claim 3 or 4, **characterized in that** the at least one sensor unit (30a; 30b; 30c) is arranged at least partially in the at least one connecting line (20a, 20b, 20c) and/or in the at least one pump unit (28a; 28b; 28c).

6. Heating system according to one of Claims 3 to 5, **characterized by** at least one open-loop and/or closed-loop control unit (32a; 32b; 32c) which is provided to actuate the at least one pump unit (28a; 28b; 28c) in a manner which is dependent on the at least one temperature parameter.

7. Heating system according to one of the preceding claims, the at least one first and the at least one second heat generator unit being part of the heating system, **characterized by** the at least one second heat generator unit (18a; 18b; 18c) which is configured as a fuel cell heating unit (34a; 34b; 34c).

8. Heating system according to one of the preceding claims, **characterized in that** the at least one first hot water tank (12a; 12b; 12c) is configured as a stratified storage tank (36a; 36b; 36c).

9. Heating system according to one of the preceding claims, **characterized in that** the at least one second hot water tank (16a; 16b; 16c) is configured as a tube coil tank (38a; 38b; 38c).

10. Method for operating a heating system (10a; 10b; 10c) according to at least one of the preceding claims, water being transported actively from a cold zone (24a; 24b; 24c) of the at least one first hot water tank (12a; 12b; 12c) into a hot zone (26a; 26b; 26c) of the at least one second hot water tank (16a; 16b; 16c) in at least one operating state, a return flow of water counter to a delivery direction of the at least one pump unit (28a, 28b; 28c) taking place via at least one second connecting line (22a, 22b, 22c), **characterized in that** the further connecting line (22a, 22b, 22c) connects the cold zone (24a, 24b, 24c) of the at least one first hot water tank (12a, 12b, 12c) to the hot zone (26a, 26b, 26c) of the at least one second hot water tank (16a, 16b, 16c), warm water flowing back from the second hot water tank (16a, 16b, 16c) into the first hot water tank (12a, 12b, 12c) via the further connecting line (22a, 22b, 22c), whereby a maximum water temperature of the second hot water tank is always kept below a minimum water temperature of the first hot water tank.

## Revendications

1. Système de chauffage avec au moins un premier réservoir d'eau chaude (12a ; 12b ; 12c) qui est prévu pour être chargé par au moins une première unité de production de chaleur (14a ; 14b ; 14c), avec au moins un deuxième réservoir d'eau chaude (16a ; 16b ; 16c) qui est prévu pour être chargé par au moins une deuxième unité de production de chaleur (18a ; 18b ; 18c), avec au moins une conduite de liaison (20a, 20b, 20c) d'une zone froide (24a ; 24b ; 24c) de l'au moins un premier réservoir d'eau chaude (12a ; 12b ; 12c) à une zone chaude (26a ; 26b ; 26c) de l'au moins un deuxième réservoir d'eau chaude (16a ; 16b ; 16c), et avec au moins une unité de pompage (28a, 28b ; 28c), qui est agencée dans l'au moins une conduite de liaison (20a, 20b, 20c), et avec au moins une autre conduite de liaison (22a, 22b, 22c) par l'intermédiaire de laquelle, dans au moins un état de fonctionnement, un reflux d'eau à l'encontre d'une direction de transport de l'au moins une unité de pompage a lieu,
**caractérisé en ce que** l'autre conduite de liaison (22a, 22b, 22c) relie la zone froide (24a, 24b, 24c) de l'au moins un premier réservoir d'eau chaude (12a, 12b, 12c) à la zone chaude (26a, 26b, 26c) de l'au moins un deuxième réservoir d'eau chaude (16a, 16b, 16c), de l'eau chaude s'écoulant en retour par l'intermédiaire de l'autre conduite de liaison (22a, 22b, 22c) du deuxième réservoir d'eau chaude (16a, 16b, 16c) dans le premier réservoir d'eau chaude (12a, 12b, 12c), ce qui permet de maintenir une température maximale de l'eau du deuxième réservoir d'eau chaude (16a, 16b, 16c) toujours en dessous d'une température minimale de l'eau du premier réservoir d'eau chaude (12a, 12b, 12c).

2. Système de chauffage selon la revendication 1, **caractérisé en ce que** l'unité de pompage (28a ; 28b ; 28c) est prévue pour maintenir une température maximale de l'eau dans l'au moins un deuxième réservoir d'eau chaude (16a ; 16b ; 16c) en dessous d'une température minimale de l'eau dans l'au moins un premier réservoir d'eau chaude (12a ; 12b ; 12c) .

3. Système de chauffage selon l'une quelconque des revendications précédentes, **caractérisé par** au moins une unité de capteur (30a ; 30b ; 30c) qui est prévue pour détecter au moins une caractéristique de température de l'au moins un premier réservoir d'eau chaude (12a ; 12b ; 12c) et/ou de l'au moins un deuxième réservoir d'eau chaude (16a ; 16b ; 16c).

4. Système de chauffage selon la revendication 3, **caractérisé en ce que** l'au moins une unité de capteur (30a ; 30b ; 30c) est agencée au moins partiellement dans l'au moins un premier réservoir d'eau chaude (12a ; 12b ; 12c) et/ou dans l'au moins un deuxième réservoir d'eau chaude (16a ; 16b ; 16c).

5. Système de chauffage selon la revendication 3 ou 4, **caractérisé en ce que** l'au moins une unité de capteur (30a ; 30b ; 30c) est agencée au moins partiellement dans l'au moins une conduite de liaison (20a, 20b, 20c) et/ou dans l'au moins une unité de pompage (28a ; 28b ; 28c).

6. Système de chauffage selon l'une quelconque des revendications 3 à 5, **caractérisé par** au moins une unité de commande et/ou de régulation (32a ; 32b ; 32c) qui est prévue pour commander l'au moins une unité de pompage (28a ; 28b ; 28c) en fonction de l'au moins une caractéristique de température.

7. Système de chauffage selon l'une quelconque des revendications précédentes, l'au moins une première et l'au moins une deuxième unité de production de chaleur faisant partie du système de chauffage, **caractérisé par** l'au moins une deuxième unité de production de chaleur (18a ; 18b ; 18c) qui est configurée sous forme d'unité de chauffage à pile à combustible (34a ; 34b ; 34c).

8. Système de chauffage selon l'une quelconque des revendications précédentes, **caractérisé en ce que** l'au moins un premier réservoir d'eau chaude (12a ; 12b ; 12c) est configuré sous forme de réservoir à charge stratifiée (36a ; 36b ; 36c).

9. Système de chauffage selon l'une quelconque des revendications précédentes, **caractérisé en ce que** l'au moins un deuxième réservoir d'eau chaude (16a ; 16b ; 16c) est configuré sous forme de réservoir à serpentin (38a ; 38b ; 38c).

10. Procédé d'exploitation d'un système de chauffage (10a ; 10b ; 10c) selon l'une quelconque des revendications précédentes, dans au moins un état de fonctionnement, de l'eau étant transportée activement d'une zone froide (24a ; 24b ; 24c) de l'au moins un premier réservoir d'eau chaude (12a ; 12b ; 12c) dans une zone chaude (26a ; 26b ; 26c) de l'au moins un deuxième réservoir d'eau chaude (16a ; 16b ; 16c), un reflux d'eau à l'encontre d'une direction de transport de l'au moins une unité de pompage (28a, 28b ; 28c) ayant lieu par l'intermédiaire d'au moins une deuxième conduite de liaison (22a, 22b, 22c),
**caractérisé en ce que** l'autre conduite de liaison (22a, 22b, 22c) relie la zone froide (24a, 24b, 24c) de l'au moins un premier réservoir d'eau chaude (12a, 12b, 12c) à la zone chaude (26a, 26b, 26c) de l'au moins un deuxième réservoir d'eau chaude (16a, 16b, 16c), de l'eau chaude s'écoulant en retour par l'intermédiaire de l'autre conduite de liaison (22a, 22b, 22c) du deuxième réservoir d'eau chaude (16a, 16b, 16c) dans le premier réservoir d'eau chaude (12a, 12b, 12c), ce qui permet de maintenir une température maximale de l'eau du deuxième réservoir d'eau chaude toujours en dessous d'une température minimale de l'eau du premier réservoir d'eau chaude.
